# EUROPEAN PATENT APPLICATION

(11) **EP 3 988 297 A1**
(43) Date of publication of application: **27.04.2022**
(21) Application number: 20826206.3
(22) Date of filing: 10.06.2020
(51) Int. Cl.: B32B 25/20, C08K 5/14, C08L 27/12, C08K 3/013

(54) **RUBBER ARTICLE AND MANUFACTURING METHOD THEREFOR, AND RUBBER PRODUCT**

(30) Priority: 18.06.2019 JP 2019112747
(71) Applicant: Shin-Etsu Chemical Co., Ltd., Tokyo 100-0005 (JP)
(72) Inventor: OSAWA, Yasuhisa, Annaka-shi, Gunma 379-0195 (JP); OOTUKA, Tosikazu, Annaka-shi, Gunma 379-0127 (JP)
(74) Representative: Mewburn Ellis LLP
(86) International application number: PCT/JP2020/022795
(87) International publication number: WO 2020/255811

(57) **Abstract**

Provided is a rubber article formed by laminating a crosslinkable fluorine-containing rubber composition (a) on a silicone rubber molded article (b), and curing and adhering (a) to (b), wherein a peroxide crosslinking agent in the crosslinkable fluorine-containing rubber composition (a) decomposes at the same time when the curing of the crosslinkable fluorine-containing rubber composition is initiated, or decomposes later than the time when the curing is initiated.

## Description

### TECHNICAL FIELD

This invention relates to a rubber article in which a perfluoropolyether based fluororubber composition of peroxide crosslinking type having satisfactory solvent resistance, chemical resistance, heat resistance and low-temperature properties is integrated with a silicone rubber molding having satisfactory compression set and workability, a method for preparing the rubber article, and a rubber product comprising the rubber article.

### BACKGROUND ART

Prior art vinylidene fluoride based fluororubbers are widely used in a variety of industrial fields centering around automobile and machinery industries because they are elastomers having satisfactory heat resistance, chemical resistance, and mechanical strength.

However, their chemical resistance is insufficient. The fluororubbers have the shortcomings that they are readily swollen in polar solvents such as ketone, lower alcohol, carbonyl and organic acid solvents, and degraded with amine-containing chemicals, suffering extreme drops of rubber strength and elongation. Also, as to low-temperature properties, they lose rubber elasticity below -20°C so that they cannot be used as sealing members. Generally their use in cold districts is limited.

To overcome these shortcomings, fluorinated curable compositions of liquid or millable type based on a perfluoro compound and a fluorinated organohydrogenpolysiloxane are proposed. See Patent Document 1: JP 2990646 (JP-A H08-199070), Patent Document 2: JP-A 2000-007835, Patent Document 3: JP-A 2001-106893, and Patent Document 4: JP-A 2003-201401.

These fluorinated curable compositions, however, are difficult to blend with cheap rubbers of different type. Their molded parts are thus generally expensive and find only limitative applications.

Under the background mentioned above, JP 4296424 discloses the technology relating to the integral molding of a perfluoropolyether based fluororubber composition of millable type and a cured silicone rubber. With this technology, however, the perfluoropolyether based fluororubber which is originally liquid must be partially crosslinked before it is blended and converted to the millable type. The procedure is cumbersome and the product eventually becomes expensive.

Patent Document 1: JP-A H08-199070
Patent Document 2: JP-A 2000-007835
Patent Document 3: JP-A 2001-106893
Patent Document 4: JP-A 2003-201401
Patent Document 5: JP 4296424

### SUMMARY OF INVENTION

### TECHNICAL PROBLEM

An object of the invention, which has been made under the above-mentioned circumstances, is to provide a rubber article in which a cured product of a crosslinkable fluororubber composition and a silicone rubber molding are integrally molded at a stable interface so that the article may have properties of both the rubbers, and a method of simply preparing the same at a low cost.

### SOLUTION TO PROBLEM

Making extensive investigations to attain the above object, the inventors have found that the outstanding problem can be solved by blending a crosslinkable fluororubber composition with an addition reactive crosslinker having a hydrosilyl group in the molecule and a peroxide crosslinker adapted to decompose at the same time as or later from the start of curing of the crosslinkable fluororubber composition. The invention is predicated on this finding.

Accordingly, the invention provides a rubber article, a method for preparing the same, and a rubber product, as defined below.
1. A rubber article comprising (a) a crosslinkable fluororubber composition lying on (b) a silicone rubber molding, the composition (a) being cured and bonded to the molding (b) for integration,
   said crosslinkable fluororubber composition (a) being a perfluoropolyether-based fluororubber composition of peroxide crosslinking type comprising:
   (A) a perfluoro compound having at least two alkenyl groups in the molecule and a divalent perfluoroalkylene structure or divalent perfluoropolyether structure in the backbone,
   (B) a reinforcing filler,
   (C) an addition reactive crosslinker having a hydrosilyl group in the molecule, in a sufficient amount to cure component (A), and
   (D) a peroxide crosslinker adapted to decompose at the same time as or later from the start of curing of the crosslinkable fluororubber composition, the crosslinking site being Si-CH=CH₂,
      said silicone rubber molding (b) being obtained by molding and curing a silicone rubber composition comprising
   (E) a diorganopolysiloxane having the average compositional formula (I):

      (R¹¹)_{I}SiO_{(4-I)/2} (I)

      wherein R¹¹ is an unsubstituted or substituted monovalent hydrocarbon group, and I is a number in the range: 1.95 < I < 2.05, a monovalent aliphatic unsaturated hydrocarbon group accounting for 0.01 to 15 mol% of the overall silicon-bonded R¹¹ in the diorganopolysiloxane,
   (F) a reinforcing filler, and
   (G) a crosslinker.
2. The rubber article of 1 wherein said silicone rubber molding (b) is a molding of the silicone rubber composition of peroxide crosslinking type.
3. The rubber article of 1 wherein said silicone rubber molding (b) is a molding of the silicone rubber composition of addition crosslinking type.
4. A method for preparing a rubber article comprising the steps of disposing (a) a crosslinkable fluororubber composition on (b) a silicone rubber molding, and curing and bonding the composition (a) to the molding (b) for thereby integrating a cured product of the composition (a) with the molding (b),
   said composition (a) being a perfluoropolyether-based fluororubber composition of peroxide crosslinking type comprising:
   (A) a perfluoro compound having at least two alkenyl groups in the molecule and a divalent perfluoroalkylene structure or divalent perfluoropolyether structure in the backbone,
   (B) a reinforcing filler,
   (C) an addition reactive crosslinker having a hydrosilyl group in the molecule, in a sufficient amount to cure component (A), and
   (D) a peroxide crosslinker, the crosslinking site being Si-CH=CH₂,
      said silicone rubber molding (b) being obtained by molding and curing a silicone rubber composition comprising
   (E) a diorganopolysiloxane having the average compositional formula (I):

      (R¹¹)_{I}SiO_{(4-I)/2} (I)

      wherein R¹¹ is an unsubstituted or substituted monovalent hydrocarbon group, and I is a number in the range: 1.95 < I < 2.05, a monovalent aliphatic unsaturated hydrocarbon group accounting for 0.01 to 15 mol% of the overall silicon-bonded R¹¹ in the diorganopolysiloxane,
   (F) a reinforcing filler, and
   (G) a crosslinker,
      wherein in the step of curing and bonding the composition (a) to the molding (b), the peroxide crosslinker (D) decomposes at the same time as or later from the start of curing of the crosslinkable fluororubber composition.
5. The method of 4 wherein said silicone rubber molding (b) is a molding of the silicone rubber composition of peroxide crosslinking type.
6. The method of 4 wherein said silicone rubber molding (b) is a molding of the silicone rubber composition of addition crosslinking type.
7. A rubber product having the rubber article of any one of 1 to 3 as a partial structure or overall structure.
8. The rubber product of 7 which is a sealing member, O-ring, diaphragm, hose, cap or valve.

### ADVANTAGEOUS EFFECTS OF INVENTION

The invention ensures that a crosslinkable fluororubber composition and a silicone rubber molding are integrally molded at a stable interface. The rubber article has excellent chemical resistance and other properties of the perfluoropolyether based fluororubber and excellent compression molding strain and other properties of the silicone rubber, and is thus of great industrial worth.

### BRIEF DESCRIPTION OF DRAWINGS

[FIG. 1] FIG. 1 is a cross-sectional view of one exemplary rubber article according to the invention.
[FIG. 2] FIG. 2 is a cross-sectional view of another exemplary rubber article according to the invention.

### DESCRIPTION OF EMBODIMENTS

Now the invention is described in detail.
(a) Crosslinkable fluororubber composition (i.e., perfluoropolyether-based fluororubber composition of peroxide crosslinking type wherein the crosslinking site is Si-CH=CH₂)

The perfluoropolyether-based fluororubber composition (a) of peroxide crosslinking type wherein the crosslinking site is Si-CH=CH₂, as used herein, may be selected from those compositions described in the above-cited Patent Documents: JP 2990646 (JP-A H08-199070), JP-A 2000-007835, JP-A 2001-106893, and JP-A 2003-201401, for example, fluoroelastomers commercially available under the trade name of SIFEL series from Shin-Etsu Chemical Co., Ltd.

Patent Document 1: JP-A H08-199070 discloses a curable composition comprising
(A') a fluorinated amide compound having the general formula (1): 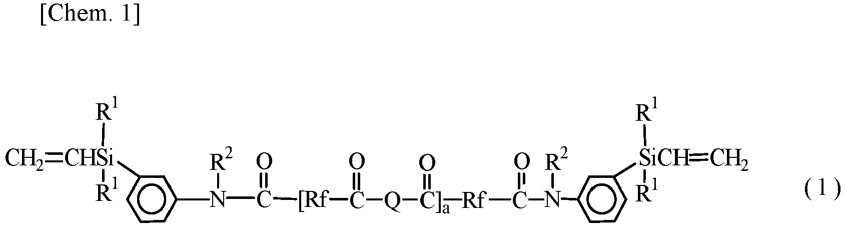 wherein R¹ is an unsubstituted or substituted monovalent hydrocarbon group, R² is hydrogen or an unsubstituted or substituted monovalent hydrocarbon group, Q is a group having the general formula (2) or (3): 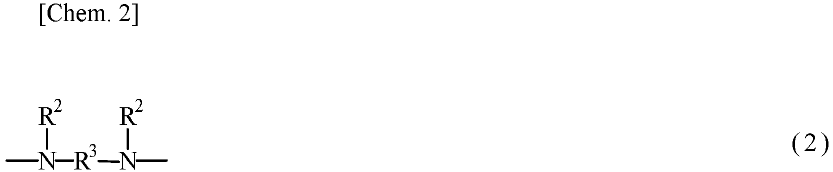 wherein R³ is an unsubstituted or substituted divalent hydrocarbon group in which one or more atoms of oxygen, nitrogen and silicon atoms may intervene in the linkage, 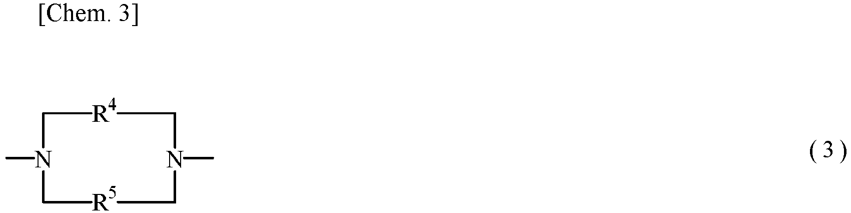 wherein R⁴ and R⁵ each are an unsubstituted or substituted divalent hydrocarbon group, Rf is a divalent perfluoroalkylene or divalent perfluoropolyether group, and "a" is an integer of at least 0,
(B') a fluorinated organohydrogensiloxane having at least one monovalent perfluorooxyalkyl group, monovalent perfluoroalkyl group, divalent perfluorooxyalkylene group, or divalent perfluoroalkylene group and at least two hydrosilyl groups per molecule, and
(C') a catalytic amount of a platinum group compound,
   wherein component (B') is used in such amounts as to provide 0.5 to 5 moles of hydrosilyl groups (Si-H groups) per mole of aliphatic unsaturated groups in the composition.

Patent Document 2: JP-A 2000-007835 discloses a crosslinkable fluororubber composition comprising (A) a polymer in the form of a perfluoro compound having at least two alkenyl groups in the molecule and a divalent perfluoroalkylene structure or divalent perfluoropolyether structure in the backbone, in which a compound having at least two hydrosilyl groups in the molecule and capable of addition reaction to alkenyl groups is added to some of the alkenyl groups, (B) a reinforcing filler, and (C) an addition reactive crosslinker having a hydrosilyl group in the molecule, in a sufficient amount to cure component (A).

Patent Document 3: JP-A 2001-106893 discloses a crosslinkable fluororubber composition comprising the same components (A), (B) and (C) as in Patent Document 2, and (D') a surface treating agent having at least one fluoroalkyl group or fluoropolyalkyl ether group in the molecule and one silanol group in the molecule.

Further, Patent Document 4: JP-A 2003-201401 discloses a crosslinkable fluororubber composition comprising (A") a polymer represented by the general formula (4): 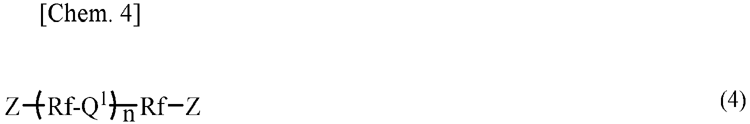 wherein n is an integer of at least 1, Rf is a divalent perfluoroalkylene group or perfluorooxyalkylene group, Q¹ is a divalent organic group, and Z is a monovalent organic group, and having a viscosity of at least 1,000 Pa·s at 25°C,
(B") a reinforcing filler, and (C") a peroxide crosslinker.

In formula (4), the divalent perfluoroalkylene group or divalent perfluorooxyalkylene group (divalent perfluoro polyether group) represented by Rf is preferably a divalent perfluoroalkylene group of the formula: -CₘF₂ₘ- wherein m is 2 to 15 or a divalent perfluorooxyalkylene group selected from the following formulae (5), (6) and (7). 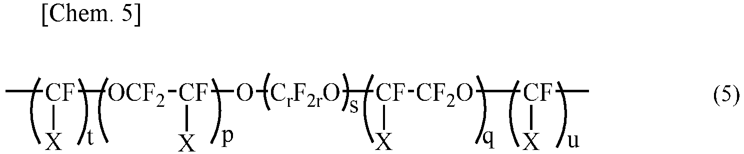 Herein X is each independently F or CF₃ group, r is an integer of 2 to 6, t and u each are 1 or 2, p and q each are an integer of 0 to 200, s is an integer of 0 to 6, p, q, and s are not equal to 0 at the same time.

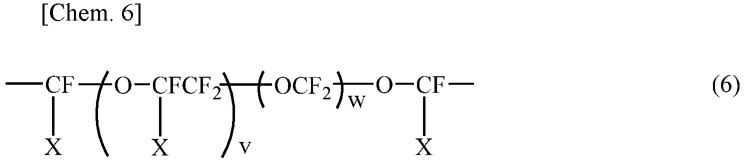

Herein X is as defined above, v and w each are an integer of 1 to 50.

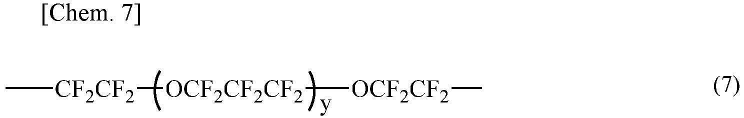

Herein y is an integer of 1 to 100.

In formula (4), Q¹ is a group having the formula (8).

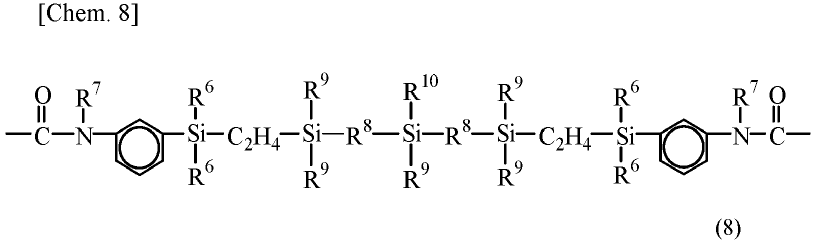

Herein R⁶ is a monovalent hydrocarbon group selected from C₁₋₁₀ alkyl groups, cycloalkyl groups, aryl groups, aralkyl groups and the foregoing groups in which some or all of the hydrogen atoms are substituted by halogen atoms, R⁷ is hydrogen or a monovalent hydrocarbon group like R⁶, R⁸ is an oxygen atom or a divalent hydrocarbon group selected from C₁₋₈ alkylene groups, cycloalkylene groups, arylene groups, and the foregoing groups in which some hydrogen is substituted by halogen, and combinations of an alkylene group with an arylene group as mentioned above, R⁹ is a monovalent hydrocarbon group like R⁶, R¹⁰ is a monovalent hydrocarbon group like R⁶, or a monovalent hydrocarbon group selected from C₂₋₂₀ monovalent hydrocarbon groups containing an aliphatic unsaturated bond, and the foregoing groups in which some or all of the hydrogen atoms are substituted by halogen atoms.

In formula (4), Z is a C₁₋₃₀ monovalent organic group which may contain an atom selected from oxygen, nitrogen, sulfur and silicon midway the linkage.

The composition is described in further detail. Component (A) of the inventive crosslinkable fluororubber composition is a perfluoro compound containing at least two alkenyl groups in the molecule and having a divalent perfluoroalkylene structure or divalent perfluoropolyether structure in the backbone.

The perfluoro compound is technically difficult to synthesize a high molecular weight polymer such as a resin or rubber therefrom. It is typically a linear perfluoro compound containing at least two alkenyl groups in the molecule and having a divalent perfluoroalkylene structure or divalent perfluoropolyether structure in the backbone, preferably having a viscosity at 25°C of 25 to 1,000,000 mm²/g. Exemplary are perfluoro compounds having the general formula (i).

### [Chem. 9]

CH₂=CH-(D)_{z}-(Rf-Q')ₐ-Rf-(D)_{z}-CH=CH₂ (i)

In formula (i), D is independently -CH₂-, -CH₂O-, -CH₂OCH₂-, -Y-NR¹⁵SO₂- or -Y-NR¹⁵-CO- wherein Y is -CH₂- or 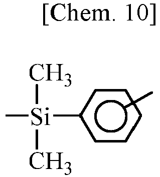 and R¹⁵ is hydrogen or an unsubstituted or substituted monovalent hydrocarbon group;
Rf is a divalent perfluoroalkylene group or divalent perfluoropolyether group;
z is independently 0 or 1;
Q' is a group having the general formula (ii), (iii) or (iv):

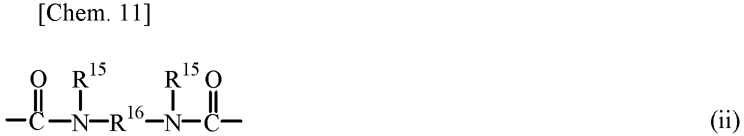

   -(D)_{z}-CH₂CH₂R¹⁷CH₂CH₂-(D)_{z}- (iii)

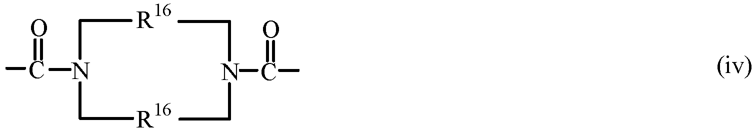

   wherein D, z and R¹⁵ are as defined above, R¹⁶ is an unsubstituted or substituted divalent hydrocarbon group, R¹⁷ is an unsubstituted or substituted divalent hydrocarbon group in which one or more atoms of oxygen, nitrogen, silicon and sulfur may intervene midway the linkage, or a group having the general formula (v) or (vi): 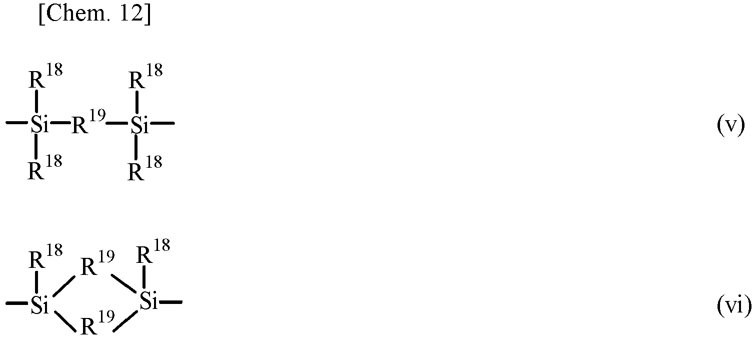 wherein R¹⁸ is an unsubstituted or substituted monovalent hydrocarbon group, and R¹⁹ is a divalent group which contains one or more atoms selected from carbon, oxygen, nitrogen, silicon and sulfur atoms in the backbone structure, and
"a" is an integer of at least 0.

As mentioned above, Rf is a divalent perfluoroalkylene group or divalent perfluoropolyether group. The divalent perfluoroalkylene group is preferably selected from groups having the formula:

-Cₘ^{,}F₂m^{,}-

wherein m' is 1 to 10, especially 2 to 6. Also, the divalent perfluoropolyether group is preferably selected from groups having the following formulae. 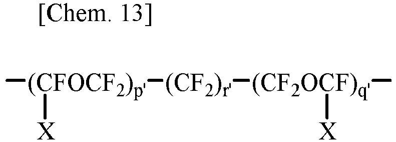 Herein X is F or CF₃ group, p', q' and r' each are an integer in the range: p' ≥ 1, q' ≥ 1, 2 ≤ p'+q' ≤ 200, preferably 2 ≤ p'+q' ≤ 110, and 0 ≤ r' ≤ 6.

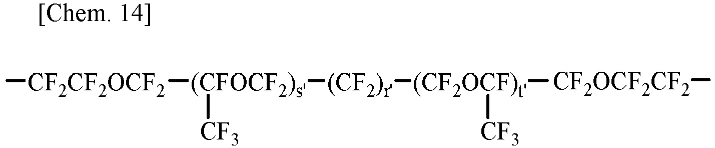

Herein r', s' and t' each are an integer in the range: 0 ≤ r' ≤ 6, s' ≥ 0, t' ≥ 0, 0 ≤ s'+t' ≤ 200, preferably 2 ≤ s'+t' ≤ 110.

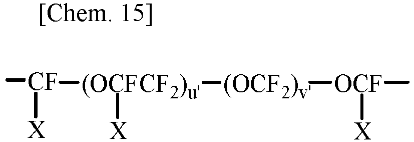

Herein X is F or CF₃ group, u' and v' each are an integer in the range: 1 ≤ u' ≤ 100 and 1 ≤ v' ≤ 50.

### [Chem. 16]

-CF₂CF₂-(OCF₂CF₂CF₂)_{w'}-OCF₂CF₂-

Herein w' is an integer: 1 ≤ w' ≤ 100.

The amount of component (A) blended is preferably 50 to 99% by weight, more preferably 60 to 90% by weight of the crosslinkable fluororubber composition (a).

### [(B) Reinforcing filler]

Suitable reinforcing fillers include carbon black and fumed silica, which may be used alone or in combination of two or more. Inter alia, silica powder is preferred for adhesion.

Silica is added to the crosslinkable fluororubber composition for the purposes of improving the mechanical strength, thermal stability, weather resistance, chemical resistance or flame retardance thereof, reducing the thermal shrinkage upon curing, and reducing the coefficient of thermal expansion of the elastomer as cured. Examples of the silica include fumed silica, wet silica and ground silica as well as those treated with surface treating agents. Inter alia, fumed silica is preferred from the standpoint of improving mechanical strength and improving the dispersion stability of components, and fumed silica treated with surface treating agents of silicon compounds such as silanes are more preferred from the standpoint of improving dispersion.

The surface treating agent (hydrophobic treating agent) is preferably selected from silicon compounds having a hydrolyzable group, for example, organochlorosilanes such as dimethyldichlorosilane and trimethylchlorosilane, silazane compounds such as hexamethyldisilazane, and cyclic silazane compounds such as hexamethylcyclotrisilazane.

For the purpose of improving mechanical properties, silica should preferably have a specific surface area of at least 50 m²/g as measured by the BET method. The specific surface area should preferably be up to 300 m²/g because otherwise silica-loaded compositions show too high a viscosity buildup and interfere with compounding.

For the silica fine powder which has been surface-treated with surface treating agents, previous direct treatment in the particulate state is preferred. Any commonly known techniques may be employed for the surface treatment. For example, untreated silica powder is fed along with a treating agent to a closed mechanical kneading unit or a fluidized bed under atmospheric pressure where they are kneaded together for treatment at room temperature or elevated temperature, optionally in the presence of an inert gas. In some cases, a catalyst and water for promoting hydrolysis may be used. Kneading is followed by drying, leaving the treated silica fine powder. The amount of the treating agent used may be at least the amount computed from the coverage area for the treating agent.

The silica should preferably have a bulk density of 30 to 80 g/L. A silica filler with a bulk density of less than 30 g/L may provide a composition with a viscosity buildup to interfere with compounding. A silica filler with a bulk density of more than 80 g/L may fail to achieve a sufficient reinforcement effect.

Component (B) is preferably added in an amount of 1 to 50% by weight, more preferably 5 to 30% by weight of the crosslinkable fluororubber composition (a). If the amount is less than 1% by weight of the filler, the adhesion or bond may be adversely affected and rubber physical properties be degraded. If the amount exceeds 50% by weight, the elongation and strength as rubber material may become short.

### [(C) Addition reactive crosslinker having hydrosilyl group in molecule]

Component (C) serves as a crosslinker and is typically an organohydrogenpolysiloxane having at least two, preferably at least three hydrosilyl groups in the molecule. The organohydrogenpolysiloxane used herein may be any of organohydrogenpolysiloxanes commonly used in silicone rubber compositions of addition reaction cure type.

Compounds having the following formulae (vii) and (viii) are preferred as component (C) when dispersibility and heat resistance are taken into account.

### [Chem. 17]

W-CH₂CH₂-(D)_{z}-Rf-(D)_{z}-CH₂CH₂-W (vii)

Rf-(D)_{z}-CH₂CH₂-W (viii)

Herein D, z, and Rf are as defined above. W is a group having the general formula (ix): 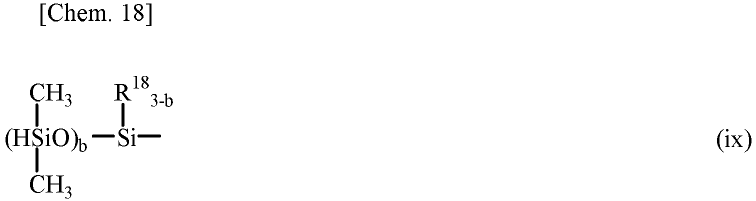 wherein R¹⁸ is an unsubstituted or substituted monovalent hydrocarbon group, and b is 1, 2 or 3 for the compounds having formula (vii) and 2 or 3 for the compounds having formula (viii).

In formulae (vii) and (viii), D is independently -CH₂-, -CH₂O-, -CH₂OCH₂-, -Y-NR¹⁵SO₂- or -Y-NR¹⁵-CO- wherein Y is -CH₂- or 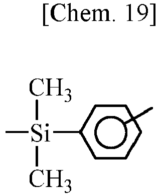 and R¹⁵ is hydrogen or an unsubstituted or substituted monovalent hydrocarbon group, Rf is a divalent perfluoroalkylene group or divalent perfluoropolyether group, and z is independently 0 or 1.

Component (C) is blended in a sufficient amount to react with residual alkenyl groups in component (A) for curing component (A). With this borne in mind, it is preferred from the standpoint of storage stability to add the crosslinker immediately before rubber molding. The amount of component (C) added is preferably such that the molar ratio of hydrosilyl groups in component (C) to alkenyl groups in component (A) may range from 0.5/1 to 5/1, more preferably from 0.8/1 to 2/1.

In component (C), an addition reaction catalyst such as a platinum group metal compound may be blended if necessary. Since the platinum group metal compounds are generally compounds of noble metals and thus expensive, platinum compounds which are readily available are often used.

The amount of the catalyst used is not particularly limited. The desired cure speed is obtained in a catalytic amount. From the economic standpoint or for obtaining satisfactory cured products, the amount is preferably about 0.1 to 1,000 ppm, more preferably about 0.1 to 500 ppm of platinum group metal based on the total weight of components (A) and (C).

### [(D) Peroxide crosslinker]

Component (D) is a peroxide crosslinker which is selected from, for example, dibenzoyl peroxide, dicumyl peroxide, di-t-butyl peroxide, t-butyl peroxyacetate, t-butyl peroxybenzoate, and 2,5-dimethyl-2,5-di-t-butylperoxy hexane. From the standpoints of storage stability and anti-scorching, 2,5-dimethyl-2,5-di-t-butylperoxy hexane is preferred.

The invention needs a choice of the peroxide crosslinker adapted to decompose at the same time as or later from the start of curing of the crosslinkable fluororubber composition. Otherwise, ineffective decomposition or radical reaction participating in neither crosslinking nor adhesion will take place. Specifically, a choice is made with reference to the cure start time (crosslinking reaction start time) of a crosslinkable fluororubber composition as measured by a curelastometer and the half-life temperature for 1 minute of a peroxide. Also, the relationship of the decomposition temperature of a peroxide crosslinker to the curing (crosslinking) temperature of a crosslinkable fluororubber composition is important. The cure start time (crosslinking reaction start time) of a crosslinkable fluororubber composition can be adjusted in terms of a catalyst amount. That is, the amount of the catalyst in a crosslinkable fluororubber composition may be adjusted in accordance with the decomposition temperature of a peroxide crosslinker. The cure start time (crosslinking reaction start time) as measured by a curelastometer is the time when the curve reaches the minimum value whereas the cure end time (crosslinking reaction termination time) refers to the time when the torque ceases to increase.

The amount of component (D) blended may be a sufficient amount to achieve crosslinking bond of component (A) to silicone rubber and is preferably 0.1 to 3 parts by weight, more preferably 0.5 to 2 parts by weight per 100 parts by weight of component (A). Less than 0.1 part by weight may achieve insufficient bond or retard crosslinking whereas more than 3 parts by weight may bring a viscosity buildup and adversely affect rubber physical properties. Preferably component (D) is blended immediately before bonding.

The crosslinkable fluororubber composition (a) is a liquid rubber composition which is best suited for forming a thin film on the surface of silicone rubber for improving the chemical resistance thereof.

### (b) Silicone rubber molding

The silicone rubber molding (b) is obtained by molding and curing a silicone rubber composition comprising (E) a diorganopolysiloxane having the average compositional formula (I):

(R¹¹)_{I}SiO_{(4-I)/2} (I)

wherein R¹¹ is an unsubstituted or substituted monovalent hydrocarbon group, and I is a number in the range: 1.95 < I < 2.05, a monovalent aliphatic unsaturated hydrocarbon group accounting for 0.01 to 15 mol% of the overall silicon-bonded R¹¹ in the diorganopolysiloxane, (F) a reinforcing filler, and (G) a crosslinker. Since the molding process is not particularly limited, a cured product may be obtained by molding via compression or HAV, and any of crosslinking systems and molding processes may be selected. No particular limit is imposed on the silicone rubber composition. Bonding is achievable without substantial problems independent of whether the silicone rubber composition is of liquid rubber type or of millable type. While the crosslinking reaction is not particularly limited, the silicone rubber composition wherein the crosslinking site contains Si-CH=CH₂ generally relies on the peroxide crosslinking type of cure using an organic peroxide or the addition crosslinking type of cure using a Si-H group-containing compound and a platinum group metal catalyst.

### [(E) Diorganopolysiloxane]

Component (E) is a diorganopolysiloxane having the average compositional formula (I):

(R¹¹)_{I}SiO_{(4-I)/2} (I)

wherein R¹¹ is an unsubstituted or substituted monovalent hydrocarbon group, and I is a number in the range: 1.95 < I < 2.05, and a monovalent aliphatic unsaturated hydrocarbon group accounts for 0.01 to 15 mol% of the overall silicon-bonded R¹¹ in the diorganopolysiloxane. If the proportion of aliphatic unsaturated hydrocarbon group is less than 0.01 mol%, a cured product having sufficient tear strength may not be obtained. If the proportion exceeds 15 mol%, there may arise problems that the cured product is brittle and sufficient tear strength is not obtained.

Examples of the monovalent aliphatic unsaturated hydrocarbon group include C₂₋₈ alkenyl groups such as vinyl and allyl, with vinyl being preferred. Besides the aliphatic unsaturated hydrocarbon group, R¹¹ is a monovalent hydrocarbon group of preferably 1 to 10 carbon atoms, more preferably 1 to 8 carbon atoms. Examples thereof include alkyl groups such as methyl and ethyl, aryl groups such as phenyl, aralkyl groups such as benzyl, and the foregoing groups in which some or all of the hydrogen atoms are substituted by halogen or the like, such as trifluoropropyl. Of these groups, methyl is most preferred. Also, the diorganopolysiloxane as component (E) may have a silicon-bonded hydroxy group.

In the average compositional formula (I), I is a number in the range: 1.95 < I < 2.05. If I is less than 1.95, a stable linear polymer may not be obtained and the polymer is likely to gel. If I exceeds 2.05, it may be difficult to obtain a high molecular weight polymer.

The diorganopolysiloxane as component (E) preferably has a degree of polymerization (DOP) of at least 1,000, more preferably at least 2,000, even more preferably 3,000 to 10,000, in order that the cured product have a satisfactory mechanical strength. The DOP is a number average degree of polymerization as measured by gel permeation chromatography (GPC) versus polystyrene standards using tetrahydrofuran (THF) as developing solvent (the same holds true, hereinafter).

Examples of the diorganopolysiloxane as component (E) include compounds having the general formula (II): 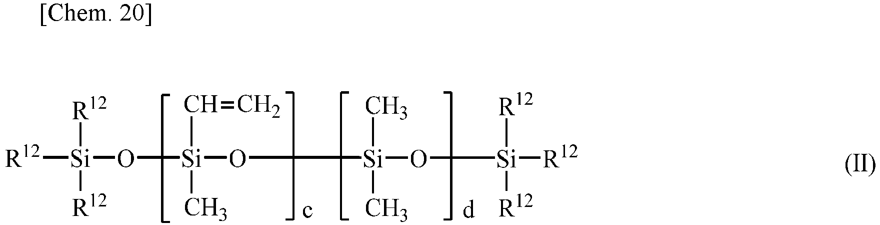 wherein c is an integer of at least 1, d is an integer of at least 1, c+d is preferably an integer of at least 1,000, more preferably at least 2,000, even more preferably 3,000 to 10,000, with the proviso that c and d have such values that -CH=CH₂ groups may account for 0.01 to 15 mol% of the overall silicon-bonded organic groups, a plurality of groups R¹² which may be the same or different are methyl, vinyl or hydroxy groups;
compounds having the general formula (III): 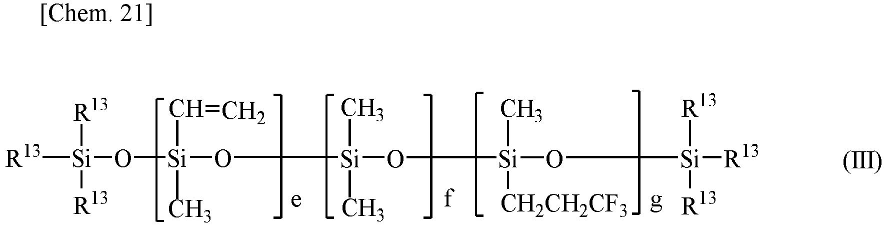 wherein e is an integer of at least 1, f is an integer of at least 1, g is an integer of at least 1, e+f+g is preferably an integer of at least 1,000, more preferably at least 2,000, even more preferably 3,000 to 10,000, with the proviso that e, f and g have such values that -CH=CH₂ groups may account for 0.01 to 15 mol% of the overall silicon-bonded organic groups, a plurality of groups R¹³ which may be the same or different are methyl, vinyl, 3,3,3-trifluoropropyl or hydroxy groups; and
compounds having the general formula (IV): 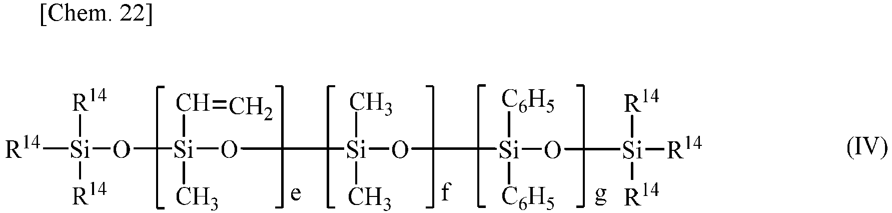 wherein e is an integer of at least 1, f is an integer of at least 1, g is an integer of at least 1, e+f+g is preferably an integer of at least 1,000, more preferably at least 2,000, even more preferably 3,000 to 10,000, with the proviso that e, f and g have such values that -CH=CH₂ groups may account for 0.01 to 15 mol% of the overall silicon-bonded organic groups, a plurality of groups R¹⁴ which may be the same or different are methyl, vinyl, phenyl or hydroxy groups.

Inter alia, the compounds having formula (II) are preferred.

The diorganopolysiloxane as component (E) may be prepared by any well-known methods, for example, by effecting (co)hydrolysis of one or more organohalosilanes to form a cyclic polysiloxane (trimer or tetramer of siloxane) and ring-opening polymerization of the cyclic polysiloxane in the presence of a basic catalyst or acidic catalyst.

### [(F) Reinforcing filler]

Component (F) is a reinforcing filler. It functions to provide the cured product with mechanical strength as well as electric conductivity and thermal conductivity. Examples of the reinforcing filler (F) include fumed silica, precipitated silica, fused silica, quartz powder, diatomaceous earth, aluminum silicate, titanium oxide, zinc oxide, iron oxide, alumina, calcium carbonate, zinc carbonate, and carbon black. Inter alia, silica is preferred for sufficient reinforcement. More preferred is silica having a specific surface area of at least 10 m²/g, especially at least 100 m²/g as measured by the BET method. Most preferred are fumed silica and precipitated silica having a specific surface area of 100 to 400 m²/g.

Also useful as component (F) are reinforcing fillers which have been surface-treated with surface treating agents, for example, chlorosilanes such as (CH₃)₃SiCl, (CH₃)₂SiCl₂, (CH₃)SiCl₃; alkoxysilanes such as CH₂=CHSi(OCH₃)₃, (CH₃)₂Si(OCH₃)₂, CH₃Si(OCH₃)₃; organosilazanes such as (CH₃)₃SiNHSi(CH₃)₃; and silicone fluids having the following general formula: 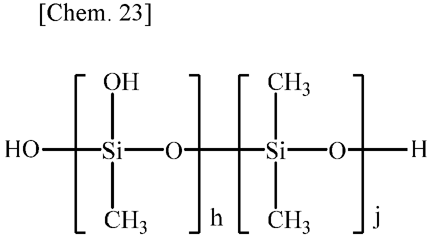 wherein h and j each are a number in the range: h > 0, j > 1, and 1 < h+j < 100. A small amount of water may be added for adjusting and promoting the hydrolytic ability of the surface treating agent.

The amount of component (F) blended is preferably 5 to 200 parts by weight, more preferably 10 to 100 parts by weight per 100 parts by weight of component (E). If the amount of component (F) blended is too small, there is a risk that workability is insufficient or no satisfactory reinforcing effect is obtained. If the amount is too large, there is a risk that the in-mold flow during working is reduced or the mechanical strength of silicone rubber is rather lowered.

### [(G) Crosslinker]

Component (G) is a crosslinker. Any crosslinker may be used as long as the inventive silicone rubber composition can be cured therewith. Component (G) is an organic peroxide in the case of peroxide crosslinking and a Si-H group-containing compound and a platinum group metal catalyst in the case of addition crosslinking. It is also possible to use the organic peroxide in combination with the Si-H group-containing compound and the platinum group metal catalyst.

Any of organic peroxides which are commonly used for curing silicone rubber of organic peroxide cure type may be used without any limitation. Examples include benzoyl peroxides such as dibenzoyl peroxide, bis(2,4-dichlorobenzoyl) peroxide, di-t-butyl peroxide, 2,5-dimethyl-di-t-butylperoxy hexane, t-butyl perbenzoate, t-butylperoxyisopropyl carbonate, and dicumyl peroxide, which may be used alone or in admixture.

In the embodiment wherein an organic peroxide is used as component (G), the amount of the organic peroxide used is preferably 0.01 to 3 parts by weight, more preferably 0.05 to 1 part by weight per 100 parts by weight of component (E) or diorganopolysiloxane.

In the embodiment wherein the silicone rubber composition is cured using an organic peroxide as component (G), the composition is generally heated at a temperature of 100 to 400°C for about 1 minute to about 5 hours.

In the other embodiment wherein a combination of a Si-H group-containing compound with a platinum group metal catalyst is used as component (G), the Si-H group-containing compound is typically an organohydrogenpolysiloxane having at least two Si-H groups per molecule. The organohydrogenpolysiloxane may have any of linear, cyclic and branched structures. The Si-H group may be attached at terminal or intermediate positions of the molecular chain. Often, an organohydrogenpolysiloxane having a DOP of up to 300 is preferably used.

Examples of the organohydrogenpolysiloxane include diorganopolysiloxanes terminated with dimethylhydrogensilyl groups; copolymers consisting of dimethylsiloxy units, methylhydrogensiloxy units, and terminal trimethylsiloxy units; low-viscosity fluids consisting of dimethylhydrogensiloxy units and SiO₂ units; 1,3,5,7-tetrahydrogen-1,3,5,7-tetramethylcyclotetrasiloxane; 1-propyl -3,5,7-trihydrogen-1,3,5,7-tetramethylcyclotetrasiloxane; and 1,5-dihydrogen-3,7-dihexyl-1,3,5,7-tetramethylcyclotetrasiloxane.

In the other embodiment wherein the Si-H group-containing compound and the platinum group metal catalyst are used as component (G), the Si-H group-containing compound is preferably used in such amounts as to provide 0.5 to 3.0 moles, more preferably 1.0 to 2.0 moles of Si-H groups per mole of aliphatic unsaturated hydrocarbon groups in component (E) or diorganopolysiloxane.

The platinum group metal catalyst is used to catalyze the hydrosilylation reaction between aliphatic unsaturated hydrocarbon groups in the diorganopolysiloxane as component (E) and Si-H groups in the organohydrogenpolysiloxane. Suitable platinum group metal catalysts are platinum based catalysts including fine powder metal platinum catalysts as described in USP 2,970,150, chloroplatinic acid catalysts as described in USP 2,823,218, platinum-hydrocarbon complex compounds as described in USP 3,159,601 and USP 3,159,662, chloroplatinic acid-olefin complex compounds as described in USP 3,516,946, and platinum-vinylsiloxane complexes as described in USP 3,775,452 and USP 3,814,780.

In the other embodiment wherein the Si-H group-containing compound and the platinum group metal catalyst are used as component (G), the platinum group metal catalyst is preferably used in such amounts as to provide 0.1 to 2,000 ppm, more preferably 1 to 1,000 ppm of platinum group metal based on the total weight of the organopolysiloxane as component (E) and the Si-H group-containing compound.

In the other embodiment wherein the silicone rubber composition alone is cured using the Si-H group-containing compound and the platinum group metal catalyst as component (G), reaction inhibitors including methylvinylcyclotetrasiloxane and acetylene alcohols such as ethynyl cyclohexanol may be added for endowing the composition with shelf stability at room temperature and an appropriate pot-life. The curing through hydrosilylation reaction is performed by heating at a temperature of 60 to 400°C for about 1 minute to about 5 hours.

While the working process is not particularly limited, it may be selected for a particular purpose from working processes commonly employed for silicone rubber, such as press molding in molds, injection molding, calendering, and extrusion molding.

The invention also provides a rubber article which is obtained by laying the crosslinkable fluororubber composition (a) on the silicone rubber molding (b), and curing and bonding the composition (a) to the molding (b) for integration. Like the silicone rubber composition, the crosslinkable fluororubber composition (a) utilizes a combination of peroxide crosslinking and addition crosslinking. Although the crosslinking conditions of the crosslinkable fluororubber composition (a) include many common parameters to the silicone rubber composition, the detail is described in conjunction with the following preparation method.

A cured product of the crosslinkable fluororubber composition (a) may be formed on one surface or both surfaces of the silicone rubber molding (b). The ratio in thickness of the cured product of the crosslinkable fluororubber composition (a) to the silicone rubber molding (b) may be arbitrarily determined.

### [Preparation method]

The method for preparing a rubber article according to the invention comprises the steps of disposing (a) a crosslinkable fluororubber composition on (b) a silicone rubber molding, and curing and bonding the composition (a) to the molding (b) for thereby integrating a cured product of the composition (a) with the molding (b). The crosslinking (curing) conditions include, for example, a temperature of 130 to 180°C and a time of 3 to 30 minutes. In the practice of the invention, it is important that in the step of curing and bonding the composition (a) to the molding (b), the peroxide crosslinker decompose at the same time as or later from the start of curing of the crosslinkable fluororubber composition. The means for establishing these conditions is as described above.

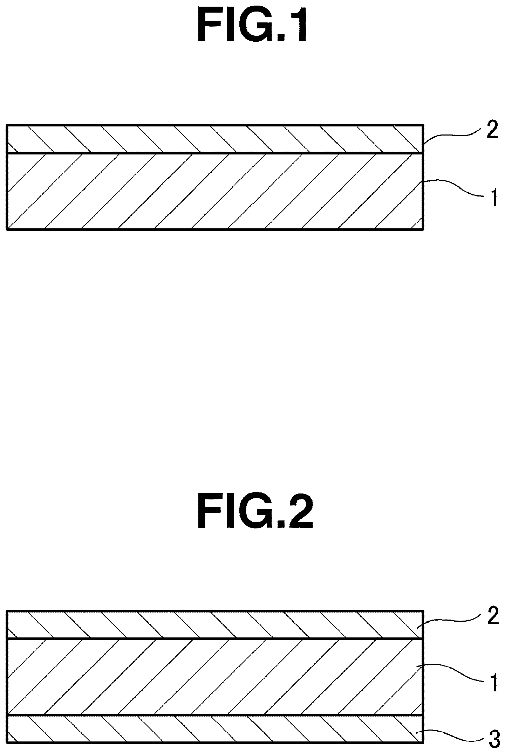

Referring to FIGS. 1 and 2, two embodiments of the method for preparing a rubber article according to the invention are described.

FIG. 1 corresponds to a processed article of simple structure wherein a two-layer rubber sheet is molded. A silicone rubber molding 1 which is obtained by adjusting the thickness of a rubber sheet by means of a press or calender roll, and molding by HAV crosslinking is placed in a mold, an uncured crosslinkable fluororubber composition is subsequently fed thereon and pressed to induce crosslinking, yielding a cured product 2 of the crosslinkable fluororubber composition (a). The rubber article can be simply prepared.

Since the surface of the cured product 2 in FIG. 1 is a surface of a perfluoropolyether based fluororubber cured product having excellent chemical resistance, the surface has excellent chemical resistance as well. Even when chemicals deposit on the surface, the silicone rubber molding 1 is never swollen or degraded. As to sheet properties, the durability as mechanical sheet is excellent by virtue of excellent compression set and strength of the silicone rubber molding 1.

FIG. 2 shows an article wherein on the opposite surface of the silicone rubber molding 1 where the cured product 2 of the crosslinkable fluororubber composition (a) is not formed, a cured product 3 of the crosslinkable fluororubber composition (a) is formed by the same procedure as in FIG. 1.

The structure shown in FIG. 2 can endure chemical attacks on both the surfaces. Also, the silicone rubber molding 1 may be one having high mechanical strength as described in conjunction with FIG. 1, or inversely one having an extremely low hardness for endowing cushioning properties.

In FIGS. 1 and 2, the ratio of the cured product of the crosslinkable fluororubber composition (a) to the silicone rubber molding (b) is arbitrary.

The rubber article of the invention find use in a variety of applications. Examples include sealing members, O-rings, diaphragms, hoses, caps, and valve members. Illustrative examples include automotive rubber parts where oil resistance is required, for example, diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, and seal members such as oil seals and cylinder head gaskets; chemical plant rubber parts, for example, pump diaphragms, valves, O-rings, hoses, packing members, oil seals, gaskets and other seal members; rubber parts for ink jet printers, rubber parts for semiconductor manufacturing lines, for example, diaphragms, valves, O-rings, packing members, seal members such as gaskets, rubber parts for ink jet printers, rubber parts for semiconductor manufacturing lines, specifically, seal members such as diaphragms, valves, O-rings, packing members, and gaskets for apparatus to come in contact with chemicals, and valves which are required to have low friction and abrasion resistance; rubber parts for analytical and experimental equipment, such as pump diaphragms, valves, seal members (e.g., O-rings and packing members); rubber parts for medical equipment, such as pumps, valves and joints; and tent coating materials, sealants, molded parts, extruded parts, coats, copier roll materials, electrical moisture-proof coatings, sensor potting materials, fuel cell sealing materials, and laminate rubber fabrics.

### EXAMPLES

Examples and Comparative Examples are given below for illustrating the invention although the invention is not limited thereto.

### [Compositions used in Examples and Comparative Examples]

### <Crosslinkable fluororubber composition (a)>

X1: SIFEL 3505A/B
   by Shin-Etsu Chemical Co., Ltd., containing components (A) to (C), addition crosslinkable standard compound
X2: SIFEL 3405A/B perfluoropolyether fluororubber composition
   by Shin-Etsu Chemical Co., Ltd., containing components (A) to (C), addition crosslinkable standard compound

Both the fluororubber compositions X1 and X2 contain 5 to 30% by weight of hydrophobic surface-treated silica as component (B).

### (D) Peroxide crosslinker D1: Perhexa 25B (NOF Corp.)

2,5-dimethyl-di(t-butylperoxy)hexane, half-life temperature for 1 minute: 179.8°C

### (D) Peroxide crosslinker D2: Nyper BMT (NOF Corp.)

benzoyl peroxide, half-life temperature for 1 minute: 131.1°C

### <Silicone rubber composition>

- Y1:: silicone rubber composition: KE951 peroxide crosslink, containing components (E) to (G), standard compound, by Shin-Etsu Chemical Co., Ltd.
- Y2:: silicone rubber composition: KE951 addition crosslink, containing components (E) to (G), standard compound, by Shin-Etsu Chemical Co., Ltd.
- Y3:: liquid silicone rubber composition: KE1950-50 (by Shin-Etsu Chemical Co., Ltd.), containing components (E) to (G), addition crosslinkable standard compound

### (1) Preparation of silicone rubber molding

Each of the liquid silicone rubber compositions Y1 to Y3 was heated and pressed at a temperature of 150°C or 170°C for 10 minutes into a sheet of 2 mm thick.

### (2) Preparation of crosslinkable fluororubber composition (a)

The amount shown in Tables 1 and 2 of crosslinker D1 or D2 was mixed with and dispersed in the fluororubber composition X1 or X2, yielding a crosslinkable fluororubber compound composition.

### (3) Preparation of rubber article

The sheet prepared above in (1) was set in a mold of 4 mm thick, after which a sufficient amount of the composition prepared above in (2) was fed in the mold and heated and pressed at a temperature of 150°C or 170°C for 10 minutes, obtaining a rubber article of 4 mm thick.

The cure start time (crosslinking reaction start time) of the crosslinkable fluororubber composition (a) was measured by a curelastometer. The decomposition start time of the peroxide crosslinker was computed from its half-life temperature for 1 minute. In Examples, the peroxide crosslinker decomposed at the same time as or later from the start of curing of the crosslinkable fluororubber composition. The resulting rubber articles were evaluated as follows. The results are also shown in Tables 1 and 2.

### <Bond evaluation test>

The sample (rubber article) of 4 mm thick was incised at its interface by a cutter knife, after which two layers were peeled apart.
- ○:: interfacial bond, cohesive failure. No separation was acknowledged even after 24-hour holding in toluene.
- ×:: Separation below the degree of bond by the molding pressure occurred at the interface. Interfacial separation was acknowledged after 24-hour holding in toluene.

**[Table 1]**

| | Fluororubber composition | Component (D) | Amount of (D) (pbw) | Molding temp. (°C) | Silicone rubber molding | Bond evaluation |
|---|---|---|---|---|---|---|
| Example 1 | X1 | D1 | 0.5 | 150 | Y1 | ○ |
| Example 2 | X1 | D1 | 1.0 | 150 | Y1 | ○ |
| Example 3 | X1 | D1 | 0.5 | 170 | Y1 | ○ |
| Example 4 | X2 | D1 | 0.5 | 150 | Y1 | ○ |
| Example 5 | X1 | D1 | 0.5 | 150 | Y2 | ○ |
| Example 6 | X1 | D1 | 0.5 | 170 | Y3 | ○ |
| Example 7 | X1 | D1 | 1.5 | 150 | Y1 | ○ |
| Example 8 | X2 | D1 | 0.5 | 150 | Y2 | ○ |
| Example 9 | X2 | D1 | 0.5 | 150 | Y3 | ○ |

**[Table 2]**

| | Fluororubber composition | Component (D) | Amount of (D) (pbw) | Molding temp. (°C) | Silicone rubber molding | Bond evaluation |
|---|---|---|---|---|---|---|
| Comparative Example 1 | X1 | - | nil | 150 | Y1 | × |
| Comparative Example 2 | X1 | D2 | 0.5 | 150 | Y1 | × |
| Comparative Example 3 | X1 | D2 | 1.0 | 150 | Y1 | × |
| Comparative Example 4 | X1 | D1 | 5.0 | 150 | Y1 | × |
| Comparative Example 5 | X1 | D1 | 0.05 | 150 | Y1 | × |

In Examples 1 to 4 which are typical of the invention, stable integrated rubber articles were obtained even when the amount of peroxide crosslinker (D), the molding temperature, and the crosslinkable fluororubber composition were changed to some extent. In Comparative Example 1 which did not contain the peroxide crosslinker, no bonding was acknowledged and upon removal of the rubber article, quick peeling occurred as a result of air accumulating at the interface.

Although the crosslinkable fluororubber composition and the silicone rubber composition were changed and the integrating conditions were changed, Examples 4 to 9 showed satisfactory bonds, yielding rubber articles comparable to those of Examples 1 to 4.

In Comparative Examples 2 and 3, the peroxide having the 1-min half-life temperature of 131.1°C was added to the crosslinkable fluororubber composition formulated to complete crosslinking under conditions: 150°C and 10 minutes. Quick peeling occurred without a need for an incision by a cutter knife. The cured fluororubber showed substantially no elongation. It is believed that in Comparative Examples 2 and 3, the peroxide crosslinker decomposed prior to the start of curing of the crosslinkable fluororubber composition, indicating ineffective decomposition of peroxide.

### REFERENCE SIGNS LIST

- 1: silicone rubber molding 1
- 2: cured product of crosslinkable fluororubber composition (a)
- 3: cured product of crosslinkable fluororubber composition (a)

## Claims

1. A rubber article comprising (a) a crosslinkable fluororubber composition lying on (b) a silicone rubber molding, the composition (a) being cured and bonded to the molding (b) for integration,
said crosslinkable fluororubber composition (a) being a perfluoropolyether-based fluororubber composition of peroxide crosslinking type comprising:
(A) a perfluoro compound having at least two alkenyl groups in the molecule and a divalent perfluoroalkylene structure or divalent perfluoropolyether structure in the backbone,
(B) a reinforcing filler,
(C) an addition reactive crosslinker having a hydrosilyl group in the molecule, in a sufficient amount to cure component (A), and
(D) a peroxide crosslinker adapted to decompose at the same time as or later from the start of curing of the crosslinkable fluororubber composition, the crosslinking site being Si-CH=CH₂,
said silicone rubber molding (b) being obtained by molding and curing a silicone rubber composition comprising
(E) a diorganopolysiloxane having the average compositional formula (I):
(R¹¹)_{I}SiO_{(4-I)/2} (I)
wherein R¹¹ is an unsubstituted or substituted monovalent hydrocarbon group, and I is a number in the range: 1.95 < I < 2.05, a monovalent aliphatic unsaturated hydrocarbon group accounting for 0.01 to 15 mol% of the overall silicon-bonded R¹¹ in the diorganopolysiloxane,
(F) a reinforcing filler, and
(G) a crosslinker.

2. The rubber article of claim 1 wherein said silicone rubber molding (b) is a molding of the silicone rubber composition of peroxide crosslinking type.

3. The rubber article of claim 1 wherein said silicone rubber molding (b) is a molding of the silicone rubber composition of addition crosslinking type.

4. A method for preparing a rubber article comprising the steps of depositing (a) a crosslinkable fluororubber composition on (b) a silicone rubber molding, and curing and bonding the composition (a) to the molding (b) for thereby integrating a cured product of the composition (a) with the molding (b),
said composition (a) being a perfluoropolyether-based fluororubber composition of peroxide crosslinking type comprising:
(A) a perfluoro compound having at least two alkenyl groups in the molecule and a divalent perfluoroalkylene structure or divalent perfluoropolyether structure in the backbone,
(B) a reinforcing filler,
(C) an addition reactive crosslinker having a hydrosilyl group in the molecule, in a sufficient amount to cure component (A), and
(D) a peroxide crosslinker, the crosslinking site being Si-CH=CH₂,
said silicone rubber molding (b) being obtained by molding and curing a silicone rubber composition comprising
(E) a diorganopolysiloxane having the average compositional formula (I):
(R¹¹)_{I}SiO_{(4-I)/2} (I)
wherein R¹¹ is an unsubstituted or substituted monovalent hydrocarbon group, and I is a number in the range: 1.95 < I < 2.05, a monovalent aliphatic unsaturated hydrocarbon group accounting for 0.01 to 15 mol% of the overall silicon-bonded R¹¹ in the diorganopolysiloxane,
(F) a reinforcing filler, and
(G) a crosslinker,
wherein in the step of curing and bonding the composition (a) to the molding (b), the peroxide crosslinker (D) decomposes at the same time as or later from the start of curing of the crosslinkable fluororubber composition.

5. The method of claim 4 wherein said silicone rubber molding (b) is a molding of the silicone rubber composition of peroxide crosslinking type.

6. The method of claim 4 wherein said silicone rubber molding (b) is a molding of the silicone rubber composition of addition crosslinking type.

7. A rubber product having the rubber article of any one of claims 1 to 3 as a partial structure or overall structure.

8. The rubber product of claim 7 which is a sealing member, O-ring, diaphragm, hose, cap or valve.
